# EUROPEAN PATENT APPLICATION

(11) **EP 4 362 144 A2**
(43) Date of publication of application: **01.05.2024**
(21) Application number: 23173327.0
(22) Date of filing: 15.05.2023
(51) Int. Cl.: H01M 8/04029, H01M 8/2457, H01M 8/2483, H01M 8/249

(54) **FUEL CELL MODULES**

(30) Priority: 28.09.2022 JP 2022155417
(71) Applicant: Toshiba Energy Systems & Solutions Corporation, Saiwai-ku Kawasaki-shi Kanagawa (JP)
(72) Inventor: Takatsuka, Kazuhiko, Kawasaki-shi, Kanagawa (JP); Kono, Motoki, Yokohama-shi, Kanagawa (JP); Kuze, Tatsuya, Yokohama-shi, Kanagawa (JP); Yamashita, Kyohei, Yokohama-shi, Kanagawa (JP)
(74) Representative: Hoffmann Eitle

(57) **Abstract**

Fuel cell modules includes a fuel cell stack group, a fuel gas supply pipe, and an oxidant gas supply pipe. The fuel cell stack group includes a first fuel cell stack row which has a plurality of the fuel cell stacks arranged along a first direction such that the positive electrode terminals are located on one side in the first direction and the negative electrode terminals are located on the other side in the first direction, and a second fuel cell stack row which has a plurality of the fuel cell stacks arranged along the first direction such that the negative electrode terminals are located on the one side in the first direction and the positive electrode terminals are located on the other side in the first direction, the fuel cell stacks in the second fuel cell stack row respectively facing the fuel cell stacks in the first fuel cell stack row in a second direction orthogonal to the first direction. The fuel gas supply pipe and the oxidant gas supply pipe are disposed between the first fuel cell stack row and the second fuel cell stack row.

## Description

### FIELD

Embodiments described herein relate to fuel cell modules.

### BACKGROUND

A fuel cell is a power generator that converts chemical energy of fuel gas into electric energy by electrochemically reacting fuel gas such as hydrogen with oxidant gas such as air. Fuel cells are used in a wide variety of applications such as for stationary use in factories, hospitals, commercial facilities and houses, and for mobile objects such as automobiles, railway vehicles, aircraft and ships.

When a large power generation output is required, fuel cell modules including a plurality of fuel cell stacks in which a plurality of unit cells (fuel cells) is stacked may be used. In such fuel cell modules, a plurality of fuel cell stacks is arranged, so that an arrangement of pipes for a fuel gas and an oxidant gas becomes complicated in relation to each of the fuel cell stacks, and a large space may be required for arranging these pipes. For this reason, the fuel cell modules may be increased in size, and a large installation space may be required.

### BRIEF DESCRIPTION OF DRAWINGS

Fig. 1 is a perspective view illustrating fuel cell modules according to an embodiment.
Fig. 2 is a perspective view of the fuel cell modules illustrated in Fig. 1 from which an enclosure is removed.
Fig. 3 is a perspective view of the fuel cell modules illustrated in Fig. 2 from which a second fuel cell stack row is removed.
Fig. 4 is a perspective view of the fuel cell modules illustrated in Fig. 2 from another angle.
Fig. 5 is a top view of the fuel cell modules illustrated in Fig. 2.

### DETAILED DESCRIPTION

Fuel cell modules according to an embodiment includes: a fuel cell stack group including a plurality of fuel cell stacks in which a plurality of fuel cells is stacked, each of the fuel cell stacks including a positive electrode terminal provided on one side in a stacking direction and a negative electrode terminal provided on the other side in the stacking direction; a fuel gas supply pipe that supplies a fuel gas to each of the fuel cell stacks; and an oxidant gas supply pipe that supplies an oxidant gas to each of the fuel cell stacks. The fuel cell stack group includes a first fuel cell stack row which has a plurality of the fuel cell stacks arranged along a first direction such that the positive electrode terminals are located on one side in the first direction and the negative electrode terminals are located on the other in the first direction, and a second fuel cell stack row which has a plurality of the fuel cell stacks arranged along the first direction such that the negative electrode terminals are located on the one side in the first direction and the positive electrode terminals are located on the other side in the first direction, the fuel cell stacks in the second fuel cell stack row respectively facing the fuel cell stacks in the first fuel cell stack row in a second direction orthogonal to the first direction. The fuel gas supply pipe and the oxidant gas supply pipe are disposed between the first fuel cell stack row and the second fuel cell stack row.

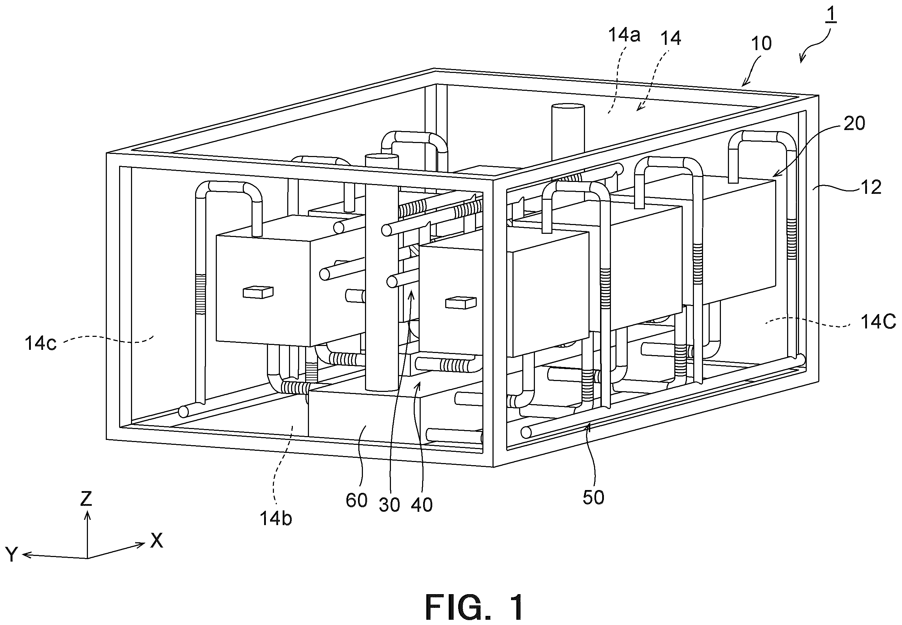

Fuel cell modules according to the embodiment will be described below with reference to Figs. 1 to 5.

The fuel cell modules according to the present embodiment are fuel cell modules for a mobile object. That is, the fuel cell modules according to the present embodiment are applied to a mobile object such as an automobile, a railway vehicle, an aircraft, or a ship. However, it is not limited thereto, and the fuel cell modules can be applied to various fields. For example, the fuel cell modules may be applied for stationary use in factories, hospitals, commercial facilities, houses, and the like.

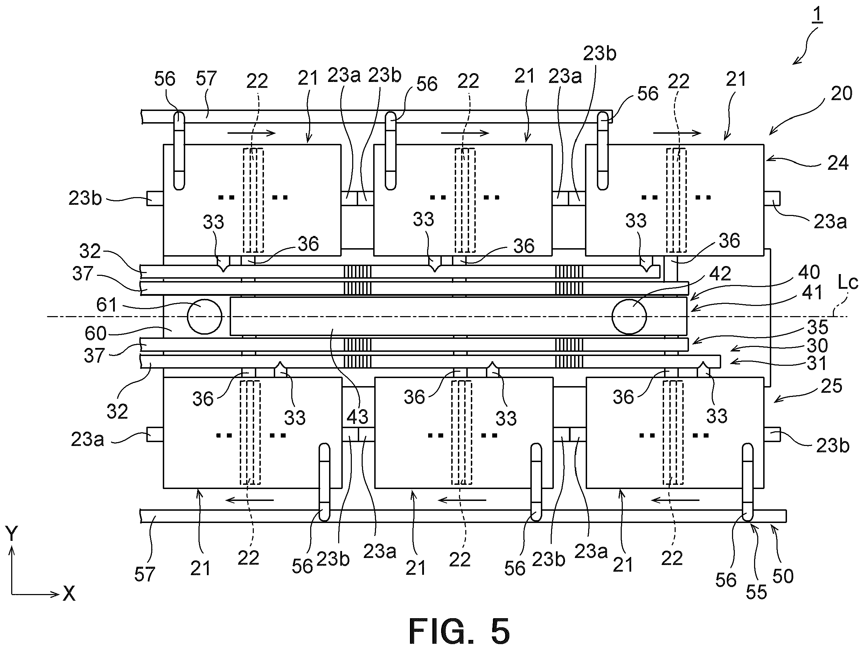

As illustrated in Fig. 1, the fuel cell modules 1 may have a substantially rectangular parallelepiped outer shape. The fuel cell modules 1 may have a length direction, a width direction, and a height direction. In the present specification, the length direction of the fuel cell modules 1 is referred to as an X direction (first direction), the width direction of the fuel cell modules 1 is referred to as a Y direction (second direction), and the height direction of the fuel cell modules 1 is referred to as a Z direction (third direction). Here, the Y direction is orthogonal to the X direction. The Z direction is orthogonal to both the X direction and the Y direction. In a state in which the fuel cell modules 1 are installed, the Z direction corresponds to the direction of gravity. When a straight line extending in the X direction through the center of the fuel cell modules 1 in the Y direction as viewed from the Z direction is defined as a centerline Lc (see Fig. 5), being closer to the centerline Lc in the Y direction is also referred to by the term "inward in the Y direction", and being away from the centerline Lc in the Y direction is also referred to by the term "outward in the Y direction".

As illustrated in Figs. 1 to 5, the fuel cell modules 1 include an enclosure 10, a fuel cell stack group 20, a fuel gas pipe 30, an oxidant gas pipe 40, a cooling liquid pipe 50, and a liquid tank 60.

As illustrated in Fig. 1, the enclosure 10 houses the fuel cell stack group 20, the fuel gas pipe 30, the oxidant gas pipe 40, the cooling liquid pipe 50, and the liquid tank 60. A part of the fuel gas pipe 30, the oxidant gas pipe 40 and the cooling liquid pipe 50 may extend to the outside of the enclosure 10.

The enclosure 10 may include a frame 12 and a panel 14 attached to the frame 12. In Fig. 1, the panel is not illustrated, and a reference sign is given to a position where the panel is disposed.

The panel 14 may include a top panel 14a, a bottom panel 14b, and four side panels 14c. The top panel 14a is located on one side (upper side in Fig. 1) in the Z direction of the fuel cell modules 1 and constitutes the top face of the fuel cell modules 1. The bottom panel 14b is located on the other side (lower side in Fig. 1) in the Z direction of the fuel cell modules 1 and constitutes the bottom face of the fuel cell modules 1. The side panels 14c are located on both sides in the X direction of the fuel cell modules 1 and on both sides in the Y direction of the fuel cell modules 1, and constitute side faces of the fuel cell modules 1.

As illustrated in Figs. 1 to 5, the fuel cell stack group 20 is disposed in the enclosure 10. The fuel cell stack group 20 is disposed on one side in the Z direction (upper side in the direction of gravity) in the enclosure 10. The fuel cell stack group 20 includes a plurality of fuel cell stacks 21. In the illustrated example, the fuel cell stack group 20 includes six fuel cell stacks 21. Each of the fuel cell stacks 21 may be supported by a support (not illustrated) so as to be located on one side in the Z direction in the enclosure 10. The fuel cell stacks 21 may have the same configuration.

Each of the fuel cell stacks 21 is configured to generate power using a fuel gas and an oxidant gas. Each of the fuel cell stacks 21 is configured by stacking a plurality of fuel cells 22 (see Fig. 5). Each fuel cell 22 generates power by a reaction represented by following Chemical Formula 1. More specifically, the fuel gas is, for example, a hydrogen-containing gas. The fuel gas flows through a fuel gas flow passage in each fuel cell 22 to cause an anodic reaction. The oxidant gas is, for example, air (atmosphere). The oxidant gas flows through an oxidant gas flow passage in each fuel cell 22 to cause a cathodic reaction. Each of the fuel cell stacks 21 is configured to generate power by the electrochemical reactions described above.

(Chemical Formula 1) anodic reaction: H₂ - 2H⁺ + 2e⁻ cathodic reaction: 1/2O₂ + 2H⁺ + 2e⁻ → H₂O

Each of the fuel cell stacks 21 is configured to cool itself, which generates heat with power generation, using a cooling liquid. More specifically, the cooling liquid is, for example, water. The cooling liquid flows through a cooling liquid flow passage in each fuel cell 22 to cool each of the fuel cell stacks 21 that generates heat with power generation.

Each of the fuel cell stacks 21 has a positive electrode terminal 23a and a negative electrode terminal 23b. Electric energy generated by each of the fuel cell stacks 21 can be extracted from the positive electrode terminal 23a and the negative electrode terminal 23b. As illustrated in Fig. 5, the positive electrode terminal 23a is provided on one side (a side pointed by solid arrows in Fig. 5) of each of the fuel cell stacks 21 in the stacking direction (indicated by the solid arrows in Fig. 5). The negative electrode terminal 23b is provided on the other side (the side opposite to the positive electrode terminal 23a) of each of the fuel cell stacks 21 in the stacking direction.

As illustrated in Fig. 5, the positive electrode terminal 23a and the negative electrode terminal 23b of the fuel cell stacks 21 adjacent to each other in the X direction may be electrically connected to each other. Further, the positive electrode terminal 23a and the negative electrode terminal 23b of the two fuel cell stacks 21 that are, for example, located on the extreme end on one side in the X direction (right side in Fig. 5) and face each other in the Y direction may also be electrically connected to each other through wiring (not illustrated). That is, the fuel cell stacks 21 may be connected in series.

The fuel cell stack group 20 includes a first fuel cell stack row 24 and a second fuel cell stack row 25.

The first fuel cell stack row 24 is located on one side (upper side in Fig. 5) in the Y direction. The first fuel cell stack row 24 includes a plurality of fuel cell stacks 21 arranged along the X direction. In the illustrated example, the first fuel cell stack row 24 includes three fuel cell stacks 21. In the first fuel cell stack row 24, the fuel cell stacks 21 are arranged along the X direction such that the positive electrode terminals 23a are located on one side (right side in Fig. 5) in the X direction and the negative electrode terminals 23b are located on the other side (left side in Fig. 5) in the X direction. As described above, in the first fuel cell stack row 24, the positive electrode terminal 23a and the negative electrode terminal 23b of the fuel cell stacks 21 adjacent to each other in the X direction may be electrically connected to each other.

The second fuel cell stack row 25 is located on the other side (lower side in Fig. 5) in the Y direction. The second fuel cell stack row 25 includes a plurality of fuel cell stacks 21 arranged along the X direction. In the illustrated example, the second fuel cell stack row 25 includes three fuel cell stacks 21. In the second fuel cell stack row 25, the fuel cell stacks 21 are arranged along the X direction so as to respectively face the fuel cell stacks 21 in the first fuel cell stack row 24. In the second fuel cell stack row 25, the fuel cell stacks 21 are arranged along the X direction such that the negative electrode terminals 23b are located on one side (right side in Fig. 5) in the X direction and the positive electrode terminals 23a are located on the other side (left side in Fig. 5) in the X direction. That is, the fuel cell stacks 21 of the first fuel cell stack row 24 and the fuel cell stacks 21 of the second fuel cell stack row 25 are disposed at the same position in the X direction, and are disposed so as to be directed in opposite directions in the Y direction. As described above, in the second fuel cell stack row 25, the positive electrode terminal 23a and the negative electrode terminal 23b of the fuel cell stacks 21 adjacent to each other in the X direction may be electrically connected to each other. The positive electrode terminal 23a of the fuel cell stack 21 located on the extreme end (right side in Fig. 5) on one side in the X direction in the first fuel cell stack row 24 and the negative electrode terminal 23b of the fuel cell stack 21 located on the extreme end on one side in the X direction (right side in Fig. 5) in the second fuel cell stack row 25 may also be electrically connected to each other through wiring (not illustrated).

In the above example, the fuel cell stack group 20 includes six fuel cell stacks 21, and the first fuel cell stack row 24 and the second fuel cell stack row 25 each include three fuel cell stacks 21. However, the configuration is not limited thereto, and the number of the fuel cell stacks 21 is arbitrary. The fuel cell stack group 20 only needs to include four or more fuel cell stacks 21, and desirably includes an even number of fuel cell stacks 21. The first fuel cell stack row 24 and the second fuel cell stack row 25 each only need to include two or more fuel cell stacks 21, and desirably include the same number of fuel cell stacks 21.

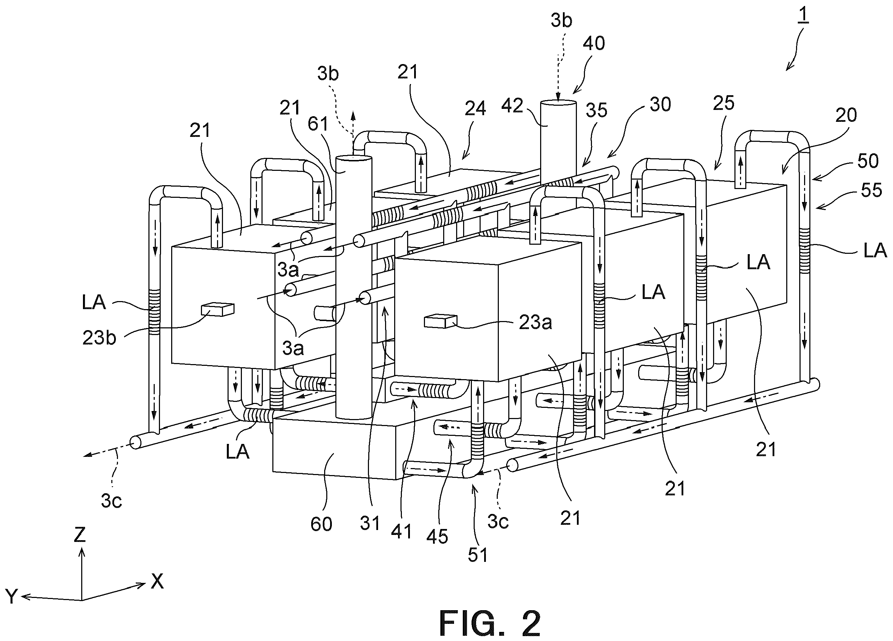

As illustrated in Figs. 1 to 5, a fuel gas pipe 30 is disposed in the enclosure 10. The fuel gas pipe 30 includes a fuel gas supply pipe 31 and a fuel gas discharge pipe 35. The fuel gas supply pipe 31 is a pipe that supplies a fuel gas 3a to each of the fuel cell stacks 21. The fuel gas discharge pipe 35 is a pipe through which the fuel gas 3a having flowed through each of the fuel cell stacks 21 is discharged. In Figs. 2 to 4, the flow of the fuel gas 3a is indicated by solid arrows.

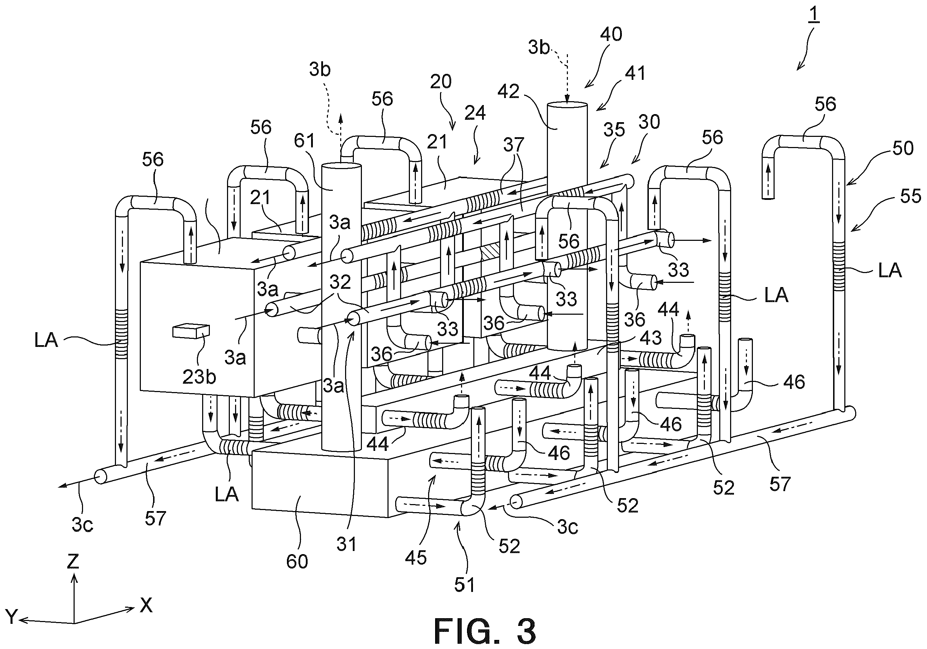

As illustrated in Figs. 3 and 5, the fuel gas supply pipe 31 may include two fuel gas supply header pipes 32 and six fuel gas individual supply pipes 33. The two fuel gas supply header pipes 32 may extend in the X direction. Three fuel gas individual supply pipes 33 may extend outward in the Y direction from one of the two fuel gas supply header pipes 32 and may be connected to the corresponding three fuel cell stacks 21 of the first fuel cell stack row 24. Three fuel gas individual supply pipes 33 may extend outward in the Y direction from the other of the two fuel gas supply header pipes 32 and may be connected to the corresponding three fuel cell stacks 21 of the second fuel cell stack row 25. The fuel gas 3a supplied from a fuel gas supply device (not illustrated) may flow through the fuel gas supply header pipes 32 and then flow through the fuel gas individual supply pipes 33 to be supplied to the fuel cell stacks 21.

The fuel gas supply pipe 31 is disposed between the first fuel cell stack row 24 and the second fuel cell stack row 25. The entire fuel gas supply pipe 31 in the enclosure 10 may be disposed between the first fuel cell stack row 24 and the second fuel cell stack row 25. However, the configuration is not limited thereto, and a part of the fuel gas supply pipe 31 in the enclosure 10 may be disposed between the first fuel cell stack row 24 and the second fuel cell stack row 25. In the illustrated example, the fuel gas supply header pipes 32 and the fuel gas individual supply pipes 33 are disposed between the first fuel cell stack row 24 and the second fuel cell stack row 25.

As illustrated in Figs. 3 and 5, the fuel gas discharge pipe 35 may include six fuel gas individual discharge pipes 36 and two fuel gas discharge header pipes 37. Each of the six fuel gas individual discharge pipes 36 may extend inward in the Y direction from the corresponding fuel cell stack 21 and bend to extend to one side (upper side in Fig. 3) in the Z direction. The two fuel gas discharge header pipes 37 may extend in the X direction. The fuel gas individual discharge pipes 36 extending from the corresponding fuel cell stacks 21 of the first fuel cell stack row 24 may be connected to one of the two fuel gas discharge header pipes 37. The fuel gas individual discharge pipes 36 extending from the corresponding fuel cell stacks 21 of the second fuel cell stack row 25 may be connected to the other of the two fuel gas discharge header pipes 37. The fuel gas 3a having flowed through the fuel cell stacks 21 may flow through the fuel gas individual discharge pipes 36, and then flow through the fuel gas discharge header pipes 37 to be discharged to the outside.

The fuel gas discharge pipe 35 may also be disposed between the first fuel cell stack row 24 and the second fuel cell stack row 25. The entire fuel gas discharge pipe 35 in the enclosure 10 may be disposed between the first fuel cell stack row 24 and the second fuel cell stack row 25. However, the configuration is not limited thereto, and a part of the fuel gas discharge pipe 35 in the enclosure 10 may be disposed between the first fuel cell stack row 24 and the second fuel cell stack row 25. In the illustrated example, the fuel gas individual discharge pipes 36 and the fuel gas discharge header pipes 37 are disposed between the first fuel cell stack row 24 and the second fuel cell stack row 25.

As illustrated in Figs. 1 to 5, an oxidant gas pipe 40 is disposed in the enclosure 10. The oxidant gas pipe 40 includes an oxidant gas supply pipe 41 and an oxidant gas discharge pipe 45. The oxidant gas supply pipe 41 is a pipe that supplies an oxidant gas 3b to each of the fuel cell stacks 21. The oxidant gas discharge pipe 45 is a pipe through which the oxidant gas 3b having flowed through each of the fuel cell stacks 21 is discharged. In Figs. 2 to 4, the flow of the oxidant gas 3b is indicated by broken arrows.

As illustrated in Figs. 3 and 5, the oxidant gas supply pipe 41 may include one oxidant gas inlet pipe 42, one oxidant gas supply header 43, and six oxidant gas individual supply pipes 44. The oxidant gas inlet pipe 42 may be disposed on one side (right side in Fig. 5) in the X direction. The oxidant gas inlet pipe 42 may extend in the Z direction and be connected to the oxidant gas supply header 43. The oxidant gas supply header 43 may extend in the X direction. Each of the six oxidant gas individual supply pipes 44 may extend outward in the Y direction from the oxidant gas supply header 43, bend to extend to one side (upper side in Fig. 3) in the Z direction, and be connected to the corresponding fuel cell stack 21. The oxidant gas 3b supplied from an oxidant gas supply device (not illustrated) may flow in through the oxidant gas inlet pipe 42, flow through the oxidant gas supply header 43, and then flow through each of the oxidant gas individual supply pipes 44 to be supplied to the corresponding fuel cell stack 21.

The oxidant gas supply pipe 41 is disposed between the first fuel cell stack row 24 and the second fuel cell stack row 25. The entire oxidant gas supply pipe 41 in the enclosure 10 may be disposed between the first fuel cell stack row 24 and the second fuel cell stack row 25. However, the configuration is not limited thereto, and a part of the oxidant gas supply pipe 41 in the enclosure 10 may be disposed between the first fuel cell stack row 24 and the second fuel cell stack row 25. In the illustrated example, the oxidant gas inlet pipe 42, the oxidant gas supply header 43, and a part of each of the oxidant gas individual supply pipes 44 are disposed between the first fuel cell stack row 24 and the second fuel cell stack row 25.

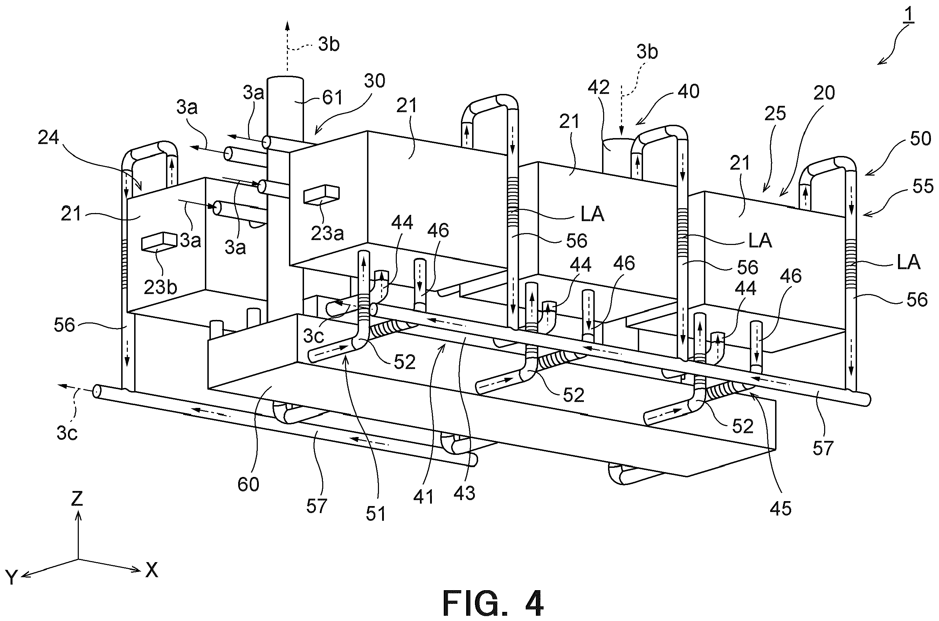

As illustrated in Figs. 3 and 4, the oxidant gas discharge pipe 45 may include six oxidant gas individual discharge pipes 46. Each of the six oxidant gas individual discharge pipes 46 may extend from the corresponding fuel cell stack 21 to the other side (the lower side in Fig. 3) in the Z direction, bend to extend inward in the Y direction, and be connected to a liquid tank 60 described later. The oxidant gas 3b having flowed through the fuel cell stacks 21 may flow through the oxidant gas individual discharge pipes 46 and be discharged to the liquid tank 60. Condensed water to be described later may also flow through the oxidant gas individual discharge pipes 46 together with the oxidant gas 3b and be discharged to the liquid tank 60.

As illustrated in Figs. 1 to 5, a cooling liquid pipe 50 is disposed in the enclosure 10. The cooling liquid pipe 50 includes a cooling liquid supply pipe 51 and a cooling liquid discharge pipe 55. The cooling liquid pipe 50 is a pipe that supplies a cooling liquid 3c to each of the fuel cell stacks 21. The cooling liquid discharge pipe 55 is a pipe through which the cooling liquid 3c having flowed through each of the fuel cell stacks 21 is discharged. In Figs. 2 to 4, the flow of the cooling liquid 3c is indicated by alternate long and short dash line arrows.

As illustrated in Figs. 3 and 4, the cooling liquid supply pipe 51 may include six cooling liquid individual supply pipes 52. Each of the six cooling liquid individual supply pipes 52 may extend outward in the Y direction from the liquid tank 60, bend to extend to one side (upper side in Fig. 3) in the Z direction, and be connected to the corresponding fuel cell stack 21. The cooling liquid 3c stored in the liquid tank 60 may flow through each of the cooling liquid individual supply pipes 52 to be supplied to the corresponding fuel cell stack 21.

As illustrated in Figs. 3 to 5, the cooling liquid discharge pipe 55 may include six cooling liquid individual discharge pipes 56 and two cooling liquid discharge header pipes 57. Each of the six cooling liquid individual discharge pipes 56 may extend from the corresponding fuel cell stack 21 to one side (upper side in Fig. 3) in the Z direction, bend to extend outward in the Y direction, and bend to extend to the other side (lower side in Fig. 3) in the Z direction. The two cooling liquid discharge header pipes 57 may extend in the X direction. The cooling liquid individual discharge pipes 56 respectively extending from the fuel cell stacks 21 of the first fuel cell stack row 24 may be connected to one of the two cooling liquid discharge header pipes 57. The cooling liquid individual discharge pipes 56 respectively extending from the fuel cell stacks 21 of the second fuel cell stack row 25 may be connected to the other of the two cooling liquid discharge header pipes 57. The cooling liquid 3c having flowed through the fuel cell stacks 21 may flow through the cooling liquid individual discharge pipes 56 and then flow through the cooling liquid discharge header pipes 57 to be discharged to the outside. The cooling liquid 3c discharged to the outside may be supplied to the liquid tank 60 again after being subjected to a predetermined treatment such as a cooling treatment or an impurity removal treatment.

The cooling liquid discharge pipe 55 may be disposed on each side of the fuel cell stack group 20 in the Y direction. In the illustrated example, three cooling liquid individual discharge pipes 56 respectively connected to the fuel cell stacks 21 of the first fuel cell stack row 24 and one cooling liquid discharge header pipe 57 are disposed on one side (upper side in Fig. 5) in the Y direction with respect to the first fuel cell stack row 24. Three cooling liquid individual discharge pipes 56 respectively connected to the fuel cell stacks 21 of the second fuel cell stack row 25 and one cooling liquid discharge header pipe 57 are disposed on the other side (lower side in Fig. 5) in the Y direction with respect to the second fuel cell stack row 25.

As illustrated in Figs. 1 to 5, the liquid tank 60 is disposed in the enclosure 10. The liquid tank 60 is configured to store the cooling liquid 3c to be supplied to each of the fuel cell stacks 21. The liquid tank 60 may have a thin box shape in which the dimension in the height direction (Z direction) is smaller than the dimension in the length direction (X direction) and the dimension in the width direction (Y direction).

As illustrated in Figs. 3 and 4, the six cooling liquid individual supply pipes 52 of the cooling liquid supply pipe 51 described above may be connected to the liquid tank 60. The cooling liquid 3c stored in the liquid tank 60 may flow through each of the cooling liquid individual supply pipes 52 to be supplied to the corresponding fuel cell stack 21. Furthermore, as described above, the cooling liquid 3c flowing through the cooling liquid discharge header pipes 57 of the cooling liquid discharge pipe 55 and discharged to the outside may be supplied to the liquid tank 60 again and stored in the liquid tank 60 after being subjected to a predetermined treatment such as a cooling treatment or an impurity removal treatment.

As described above, the six oxidant gas individual discharge pipes 46 of the oxidant gas discharge pipe 45 may be connected to the liquid tank 60. The oxidant gas 3b having flowed through the fuel cell stacks 21 may flow through the oxidant gas individual discharge pipes 46 and be discharged to the liquid tank 60. An oxidant gas outlet pipe 61 may extend from the upper portion of the liquid tank 60 to one side (upper side in Fig. 3) in the Z direction. The oxidant gas outlet pipe 61 may be disposed on the other side (left side in Fig. 5) in the X direction. The oxidant gas 3b discharged to the liquid tank 60 may be discharged to the outside through the oxidant gas outlet pipe 61.

Here, condensed water (H₂O) is generated by the above-described cathodic reaction in each of the fuel cell stacks 21. The oxidant gas 3b discharged from each of the fuel cell stacks 21 may also contain the generated condensed water. The condensed water may also be discharged to the liquid tank 60 together with the oxidant gas 3b. That is, the condensed water generated in the fuel cell stacks 21 may flow through the oxidant gas individual discharge pipes 46 together with the oxidant gas 3b to be discharged to the liquid tank 60. The condensed water discharged to the liquid tank 60 may be stored in the liquid tank 60 as the cooling liquid 3c.

The liquid tank 60 may be adjacent to the fuel cell stack group 20 in the Z direction. In particular, the liquid tank 60 may be disposed on the other side in the Z direction with respect to the fuel cell stack group 20, that is, below the fuel cell stack group 20 in the direction of gravity. The liquid tank 60 may be disposed on the bottom panel 14b of the enclosure 10. The liquid tank 60 may be disposed between the bottom panel 14b and the fuel cell stack group 20.

The liquid tank 60 may be disposed between the first fuel cell stack row 24 and the second fuel cell stack row 25 in the Y direction. The entire liquid tank 60 may be disposed between the first fuel cell stack row 24 and the second fuel cell stack row 25, or a part of the liquid tank 60 may be disposed between the first fuel cell stack row 24 and the second fuel cell stack row 25. In this case, the oxidant gas outlet pipe 61 described above may extend in the Z direction between the first fuel cell stack row 24 and the second fuel cell stack row 25.

As illustrated in Figs. 2 to 4, at least one of the fuel gas pipe 30, the oxidant gas pipe 40 and the cooling liquid pipe 50 may have a length adjustment mechanism LA capable of adjusting the pipe length. That is, at least one of the fuel gas supply pipe 31, the fuel gas discharge pipe 35, the oxidant gas supply pipe 41, the oxidant gas discharge pipe 45, the cooling liquid supply pipe 51 and the cooling liquid discharge pipe 55 may have the length adjustment mechanism LA. All of the fuel gas supply pipe 31, the fuel gas discharge pipe 35, the oxidant gas supply pipe 41, the oxidant gas discharge pipe 45, the cooling liquid supply pipe 51 and the cooling liquid discharge pipe 55 may have the length adjustment mechanism LA.

In the illustrated example, each of the fuel gas supply header pipes 32 has the length adjustment mechanism LA. Accordingly, the length of each of the fuel gas supply header pipes 32 in the X direction can be adjusted. In addition, each of the fuel gas discharge header pipes 37 has the length adjustment mechanism LA. Accordingly, the length of each of the fuel gas discharge header pipes 37 in the X direction can be adjusted. In addition, each of the oxidant gas individual supply pipes 44 has the length adjustment mechanism LA on a portion extending in the Y direction. Accordingly, the length of each of the oxidant gas individual supply pipes 44 in the Y direction can be adjusted. In addition, each of the oxidant gas individual discharge pipes 46 has the length adjustment mechanism LA on a portion extending in the Y direction. Accordingly, the length of each of the oxidant gas individual discharge pipes 46 in the Y direction can be adjusted. In addition, each of the cooling liquid individual supply pipes 52 has the length adjustment mechanism LA on a portion extending in the Z direction. Accordingly, the length of each of the cooling liquid individual supply pipes 52 in the Z direction can be adjusted. In addition, each of the cooling liquid individual discharge pipes 56 has the length adjustment mechanism LA on a portion extending in the Z direction. Accordingly, the length of each of the cooling liquid individual discharge pipes 56 in the Z direction can be adjusted.

As described above, the length of each pipe can be adjusted by the length adjustment mechanism LA disposed in the pipe, which makes it possible to accommodate a change in the dimension of each of the fuel cell stacks 21 or an interval between the fuel cell stacks 21 due to a manufacturing error or the like. The length adjustment mechanism LA may be, for example, a bellows, a flexible hose, or the like. Note that the configuration is not limited to the above-described example, and the length adjustment mechanism LA may be disposed at any position of each pipe.

Next, the operation of the present embodiment having such a configuration will be described.

During operation of the fuel cell modules 1, the fuel gas 3a is supplied from a fuel gas supply device (not illustrated) to the fuel gas supply pipe 31. The fuel gas 3a supplied from the fuel gas supply device flows through the fuel gas supply header pipes 32 and then flows through the fuel gas individual supply pipes 33 to be supplied to the fuel cell stacks 21.

The oxidant gas 3b is supplied from an oxidant gas supply device (not illustrated) to the oxidant gas supply pipe 41. The oxidant gas 3b supplied from the oxidant gas supply device flows in through the oxidant gas inlet pipe 42, flows through the oxidant gas supply header 43, and then flows through the oxidant gas individual supply pipes 44 to be supplied to the fuel cell stacks 21.

The cooling liquid 3c is supplied from the liquid tank 60 to the cooling liquid supply pipe 51. The cooling liquid 3c supplied from the liquid tank 60 flows through the cooling liquid individual supply pipes 52 to be supplied to the fuel cell stacks 21.

The fuel gas 3a supplied to each of the fuel cell stacks 21 flows through the fuel gas flow passage in each fuel cell 22 to cause an anodic reaction. The oxidant gas 3b supplied to each of the fuel cell stacks 21 flows through the oxidant gas flow passage in each fuel cell 22 to cause a cathodic reaction. Power is generated by the fuel cell stacks 21 due to the electrochemical reactions described above. The cooling liquid 3c supplied to each of the fuel cell stacks 21 flows through a cooling liquid flow passage in each fuel cell 22 to cool the fuel cell stack 21 that generates heat with power generation.

The fuel gas 3a having flowed through the fuel cell stacks 21 is discharged through the fuel gas discharge pipe 35. The fuel gas 3a having flowed through the fuel cell stacks 21 flows through the fuel gas individual discharge pipes 36, then flows through the fuel gas discharge header pipes 37, and is discharged to the outside.

The oxidant gas 3b having flowed through the fuel cell stacks 21 is discharged through the oxidant gas discharge pipe 45. The oxidant gas 3b having flowed through the fuel cell stacks 21 flows through the oxidant gas individual discharge pipes 46 and is discharged to the liquid tank 60. The oxidant gas 3b discharged to the liquid tank 60 is discharged to the outside through the oxidant gas outlet pipe 61.

The condensed water generated by the cathodic reaction is also discharged through the oxidant gas discharge pipe 45 together with the oxidant gas 3b. The condensed water generated in the fuel cell stacks 21 flows through the oxidant gas individual discharge pipes 46 together with the oxidant gas 3b to be discharged to the liquid tank 60. The condensed water discharged to the liquid tank 60 is stored in the liquid tank 60 as the cooling liquid 3c.

The cooling liquid 3c having flowed through the fuel cell stacks 21 is discharged through the cooling liquid discharge pipe 55. The cooling liquid 3c having flowed through the fuel cell stacks 21 flows through the cooling liquid individual discharge pipes 56 and then flows through the cooling liquid discharge header pipes 57 to be discharged to the outside. The cooling liquid 3c discharged to the outside is supplied to the liquid tank 60 again and stored in the liquid tank 60 after being subjected to a predetermined treatment such as a cooling treatment or an impurity removal treatment.

According to the present embodiment, the fuel cell stack group 20 includes the first fuel cell stack row 24 and the second fuel cell stack row 25, and the fuel gas supply pipe 31 and the oxidant gas supply pipe 41 are disposed between the first fuel cell stack row 24 and the second fuel cell stack row 25. With this configuration, the plurality of fuel cell stacks 21, the fuel gas supply pipe 31 and the oxidant gas supply pipe 41 can be efficiently disposed in the enclosure 10, whereby an increase in the dimension in the length direction (X direction) and the dimension in the height direction (Z direction) of the fuel cell modules 1 can be suppressed. Therefore, the fuel cell modules 1 can be downsized.

In addition, according to the present embodiment, the fuel gas discharge pipe 35 is also disposed between the first fuel cell stack row 24 and the second fuel cell stack row 25. This makes it possible to further suppress an increase in the dimension in the length direction (X direction) and the dimension in the height direction (Z direction) of the fuel cell modules 1. Therefore, the fuel cell modules 1 can be further downsized.

In addition, according to the present embodiment, the cooling liquid discharge pipe 55 is disposed on each side of the fuel cell stack group 20 in the Y direction. A relatively large space can be ensured on both sides of the fuel cell stack group 20 in the Y direction. Therefore, the overall length of the cooling liquid discharge pipes 55 can be increased. Thus, more insulating members such as resin can be disposed in the cooling liquid discharge pipes 55. An insulating member such as resin is commonly disposed in the cooling liquid discharge pipes 55 in order to prevent electricity generated by the fuel cell stacks 21 from leaking (electric leakage) to the outside together with the cooling liquid 3c. Therefore, by increasing the overall length of the cooling liquid discharge pipe 55 to allow more insulating members to be disposed in the cooling liquid discharge pipe 55, electric leakage from the fuel cell stacks 21 can be further suppressed.

In addition, according to the present embodiment, the liquid tank 60 is adjacent to the fuel cell stack group 20 in the Z direction. With this configuration, the liquid tank 60 can be efficiently disposed in a limited space in the enclosure 10, whereby an increase in the dimension in the length direction (X direction) and the dimension in the width direction (Y direction) of the fuel cell modules 1 due to the arrangement of the liquid tank 60 can be suppressed. Therefore, the fuel cell modules 1 can be further downsized.

In particular, according to the present embodiment, the liquid tank 60 is disposed below the fuel cell stack group 20 in the direction of gravity. The liquid tank 60 stores the cooling liquid 3c, and thus, the weight thereof is relatively great. By disposing the liquid tank 60 below the fuel cell stack group 20 in the direction of gravity, the center of gravity of the fuel cell modules 1 can be positioned lower in the direction of gravity. Therefore, the fuel cell modules 1 can be stabilized against shaking or the like when the fuel cell modules 1 are installed.

In addition, according to the present embodiment, the oxidant gas discharge pipe 45 is connected to the liquid tank 60. With this configuration, the oxidant gas 3b having flowed through the fuel cell stacks 21 is discharged to the liquid tank 60. Here, the oxidant gas 3b discharged from each of the fuel cell stacks 21 can also contain condensed water generated by the cathodic reaction. Therefore, the condensed water can also be discharged to the liquid tank 60 together with the oxidant gas 3b, and the condensed water discharged from each of the fuel cell stacks 21 can be stored in the liquid tank 60 as the cooling liquid 3c. In common fuel cell modules, condensed water discharged from each of fuel cell stacks is collected in a header pipe and flows through the header pipe. On the other hand, in the fuel cell modules 1 according to the present embodiment, the liquid tank 60 functions as the header pipe. In other words, the liquid tank 60 storing the cooling liquid 3c and the header pipe collecting the discharged condensed water are integrated. This makes it unnecessary to separately dispose a header pipe in which the discharged condensed water is collected. Therefore, the fuel cell modules 1 can be further downsized.

In addition, according to the present embodiment, at least one of the fuel gas supply pipe 31, the fuel gas discharge pipe 35, the oxidant gas supply pipe 41, the oxidant gas discharge pipe 45, the cooling liquid supply pipe 51 and the cooling liquid discharge pipe 55 has the length adjustment mechanism LA capable of adjusting the pipe length. Therefore, even when the dimension of each of the fuel cell stacks 21 or an interval between the fuel cell stacks 21 changes due to a manufacturing error or the like, the length of each pipe can be adjusted by the length adjustment mechanism LA. This facilitates the connection between the fuel cell stacks 21 and the pipes, and thereby facilitates assembly of the fuel cell modules 1.

In addition, according to the present embodiment, the fuel cell modules 1 are fuel cell modules 1 for a mobile object. The fuel cell modules 1 for a mobile object needs a large power generation output, and a plurality of fuel cell stacks 21 may be used. Furthermore, the fuel cell modules 1 for a mobile object may be required to be further downsized due to restriction of an installation space. The fuel cell modules 1 according to the present embodiment can be suitably used as the fuel cell modules 1 for a mobile object.

The embodiment described above can achieve a reduction in size of the fuel cell modules.

While the embodiments have been described above, these embodiments are presented as examples, and are not intended to limit the scope of the inventions. These novel embodiments can be implemented in various other forms, and various omissions, substitutions and changes are possible without departing from the spirit of the inventions. These embodiments and modifications thereof are included in the scope and spirit of the inventions, and are included in the inventions described in the claims and the equivalent thereof.

## Claims

1. Fuel cell modules comprising:
a fuel cell stack group including a plurality of fuel cell stacks in which a plurality of fuel cells is stacked, each of the fuel cell stacks including a positive electrode terminal provided on one side in a stacking direction and a negative electrode terminal provided on the other side in the stacking direction;
a fuel gas supply pipe that supplies a fuel gas to each of the fuel cell stacks; and
an oxidant gas supply pipe that supplies an oxidant gas to each of the fuel cell stacks,
wherein the fuel cell stack group includes a first fuel cell stack row which has a plurality of the fuel cell stacks arranged along a first direction such that the positive electrode terminals are located on one side in the first direction and the negative electrode terminals are located on the other side in the first direction, and a second fuel cell stack row which has a plurality of the fuel cell stacks arranged along the first direction such that the negative electrode terminals are located on the one side in the first direction and the positive electrode terminals are located on the other side in the first direction, the fuel cell stacks in the second fuel cell stack row respectively facing the fuel cell stacks in the first fuel cell stack row in a second direction orthogonal to the first direction, and
wherein the fuel gas supply pipe and the oxidant gas supply pipe are disposed between the first fuel cell stack row and the second fuel cell stack row.

2. The fuel cell modules according to claim 1, further comprising
a fuel gas discharge pipe through which the fuel gas having flowed through each of the fuel cell stacks is discharged,
wherein the fuel gas discharge pipe is also disposed between the first fuel cell stack row and the second fuel cell stack row.

3. The fuel cell modules according to claim 1, further comprising:
a cooling liquid supply pipe that supplies a cooling liquid to each of the fuel cell stacks; and
a cooling liquid discharge pipe through which the cooling liquid having flowed through each of the fuel cell stacks is discharged,
wherein the cooling liquid discharge pipe is disposed on each side of the fuel cell stack group in the second direction.

4. The fuel cell modules according to claim 3, further comprising
a liquid tank that stores the cooling liquid to be supplied to each of the fuel cell stacks,
wherein the liquid tank is adjacent to the fuel cell stack group in a third direction orthogonal to both the first direction and the second direction.

5. The fuel cell modules according to claim 4, wherein the liquid tank is disposed below the fuel cell stack group in a direction of gravity.

6. The fuel cell modules according to claim 4, further comprising
an oxidant gas discharge pipe through which the oxidant gas having flowed through each of the fuel cell stacks is discharged,
wherein the oxidant gas discharge pipe is connected to the liquid tank.

7. The fuel cell modules according to claim 1, wherein at least one of the fuel gas supply pipe and the oxidant gas supply pipe has a length adjustment mechanism capable of adjusting a pipe length.

8. The fuel cell modules according to any one of claims 1 to 7, wherein the fuel cell modules are fuel cell modules for a mobile object.
